(19) Europäisches Patentamt

European Patent Office

Office européen des brevets

(11) **EP 0 975 106 B1**

(12) **FASCICULE DE BREVET EUROPEEN**

(45) Date de publication et mention
de la délivrance du brevet:
**12.12.2001 Bulletin 2001/50**

(51) Int Cl.$^7$: **H04B 10/18**

(21) Numéro de dépôt: **99401395.1**

(22) Date de dépôt: **10.06.1999**

(54) **Dispositif de régénération en ligne d'un signal optique de solitons par une modulation synchrone de ces solitons et système de transmission comportant un tel dispositif**

Anordnung zum Inline-Regenerieren eines optischen Solitonsignals durch synchrone Modulation dieser Solitonen und Übertragungssystem mit einer derartigen Vorrichtung

Device for on-line regeneration of an optical soliton signal by synchronous modulation of these solitons and transmission system comprising such a device

(84) Etats contractants désignés:
**DE GB IT**

(30) Priorité: **23.07.1998 FR 9809410**

(43) Date de publication de la demande:
**26.01.2000 Bulletin 2000/04**

(73) Titulaire: **ALCATEL**
**75008 Paris (FR)**

(72) Inventeurs:
• **Maunand, Elisabeth**
**75013 Paris (FR)**
• **Desurvire, Emmanuel**
**91680 Bruyeres le Chatel (FR)**
• **Leclerc, Olivier**
**91240 Saint Michel sur Orge (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(56) Documents cités:
• BIGO S ET AL: "ERROR-FREE SOLITON TRANSMISSION AT 20 GBIT/S OVER 7150 KM THROUGH ALL-OPTICAL SYNCHRONOUS PHASE MODULATION" ELECTRONICS LETTERS, vol. 33, no. 6, 13 mars 1997 (1997-03-13), page 449/450 XP000693253
• BIGO S ET AL: "ALL-OPTICAL REGENERATOR FOR 20 GBIT/S TRANSOCEANIC TRANSMISSION" ELECTRONICS LETTERS, vol. 33, no. 11, 22 mai 1997 (1997-05-22), page 975/976 XP000727023
• DURHUUS T ET AL: "MONOLITHIC INTEGRATED MACH-ZEHNDER WAVELENGTH CONVERTER: CONVERSIONAND TRANSMISSION EXPERIMENTS AT 5 GBIT/S" OPTICAL FIBER COMMUNICATION. SUMMARIES OF PAPERS PRESENTED AT THE CONFERENCE OFC '95, SAN DIEGO, FEB. 26 - MAR. 3, 1995, 26 février 1995 (1995-02-26), page 75/76 XP000517654 INSTITUTE OF ELECTRICAL AND ELECTRONICS ENGINEERS

**Description**

L'invention concerne le domaine des télécommunications sur fibre optique, et plus particulièrement des télécommunications sur des longues distances. Il est connu, pour des liaisons très longues distances à fibre optique, d'utiliser un signal de type "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal optique pour contrebalancer la dispersion chromatique et vice-versa.

En effet, pour de tels signaux optiques, la forme spectrale du signal optique est préservée malgré les effets de la distance de propagation, qui se résument ainsi principalement à des pertes de ligne.

Ces pertes de ligne peuvent être compensées par une amplification optique en ligne, par exemple à l'aide d'un amplificateur à fibre dopée Erbium, également connu sous son nom en anglais "EDFA".

Cependant, pour la transmission par solitons avec amplification en ligne (EDFA), deux problèmes majeurs subsistent :

1) La gigue Gordon-Haus qui cause une incertitude temporelle de l'arrivée des bits du signal.
2) L'accumulation de bruit provenant de l'amplification de l'émission spontanée dans les amplificateurs optiques.

Différentes solutions ont été proposées et décrites parmi lesquelles on cite plus particulièrement l'article de Nakazawa et al. "Experimental démonstration of soliton data transmission over unlimited distances with soliton control in time and frequency domains", Electronics Letters, V. 29, N°9, pp729-730, 29 avril 1993.

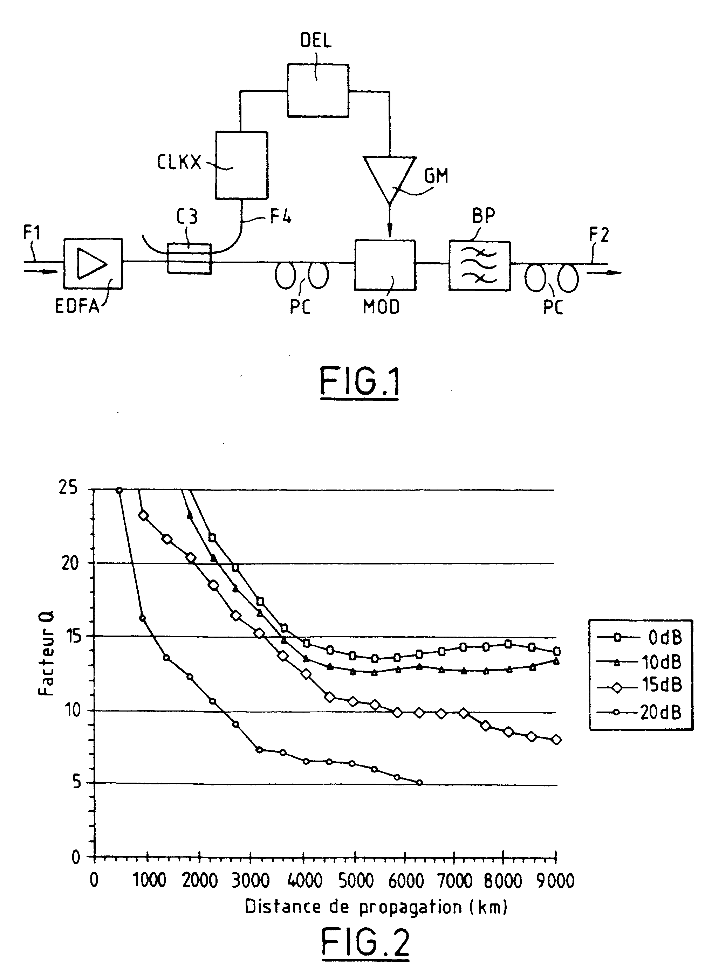

Ce document enseigne l'utilisation d'un dispositif de régénération en ligne d'un signal optique de solitons par une modulation synchrone de ces solitons, tel que montré schématiquement sur la figure 1.

Ce dispositif de régénération comprend un modulateur MOD commandé par un signal électrique de commande généré dans un circuit d'horloge à partir du signal de solitons en ligne. Les moyens de récupération d'un signal d'horloge comprennent un coupleur optique C3 pour l'extraction d'une partie du signal optique qui se propage entre l'entrée F1 et la sortie F2, un circuit d'extraction d'horloge CLKX, une ligne de retard DEL pour fournir un délai et un amplificateur GM pour fournir la puissance nécessaire pour commander le modulateur MOD réalisé par exemple en LiNO$_3$.

Par ailleurs, entre le coupleur C3 et le modulateur MOD est disposé un dispositif de contrôle de polarisation PC biréfringent, et en aval du modulateur sont disposés en série un filtre passe bande BP pour resserrer la distribution spectrale de l'énergie des solitons et un autre dispositif de contrôle de polarisation PC biréfringent.

Comme pour tous les éléments optiques, outre les pertes dues aux couplages et les pertes dues à la fonction de transfert de l'élément, il faut aussi considérer des pertes dites "supplémentaires" qui sont des pertes intrinsèques dues par exemple au matériau utilisé pour la fabrication de l'élément optique. Dans le cas des dispositifs de régénération connus, notamment à semi-conducteur, ces pertes supplémentaires peuvent atteindre jusqu'à 20 dB, au maximum de leur transmittivité.

Pour pallier ces pertes, un amplificateur optique EDFA est par exemple disposé dans la fibre d'entrée F1 comme cela est montré sur la figure 1, ou, en variante, dans la fibre de sortie F2.

Toutefois, de tels amplificateurs optiques d'entrée EDFA augmentent le coût du dispositif de régénération et contribuent à la dégradation du rapport signal /bruit. En outre, la puissance de sortie de ces amplificateurs en ligne est limitée de sorte qu'ils ne permettent pas toujours de compenser les pertes supplémentaires engendrées par le dispositif de régénération.

La figure 2 montre un graphique présentant le résultat d'une simulation numérique ayant pour but de montrer les influences des pertes, en particulier les pertes supplémentaires, engendrées par ces dispositifs de régénération sur la qualité de transmission d'un signal de solitons. Dans cette simulation, on a considéré un système de transmission à 20 Gb/s avec un espacement de 45km entre amplificateurs en ligne EDFA, et de 450km entre dispositifs de régénération. En outre un amplificateur en ligne EDFA est disposé en aval de chaque dispositif de régénération pour compenser, au moins en partie, les pertes sur le signal de solitons, dues à celui-ci.

Le graphique montre le facteur de qualité en fonction de la distance de transmission pour des dispositifs de régénération engendrant respectivement des pertes de 0dB, 10dB, 15dB et 20dB.

On voit clairement sur cette figure que plus la perte engendrée par un dispositif de régénération est importante, plus la qualité de transmission diminue. Pour des pertes importantes, on voit en outre que le seuil admissible du facteur de qualité Q = 6, ce qui correspond à un taux d'erreur du système de transmission de $10^{-9}$, n'est déjà plus atteinte pour des distances de 6000km. On conçoit donc aisément l'intérêt de disposer de dispositifs de régénération engendrant des pertes faibles.

Un autre dispositif de régénération en ligne d'un signal optique de solitons par modulation synchrone de ces solitons est décrit dans l'article de S. Bigo et al "Error-free soliton transmission at 20 Gbit/s over 7150 km through all-optical synchronous phase modulation", Electronic Letters, vol. 33, n° 6, 13-03-97, page 449-450. Ce dispositif de régénération comprend des moyens de récupération d'un signal d'horloge et des moyens de modulation de type MACH-ZEHNDER.

L'invention vise à proposer un dispositif de régénération permettant de moduler l'amplitude de solitons de manière efficace et précise, et qui n'engendre que des pertes supplémentaires faibles.

A cet effet, l'invention a pour objet un dispositif de régénération en ligne d'un signal optique de solitons par une modulation synchrone de ces solitons, ledit dispositif comprenant :

- des moyens de récupération d'un signal d'horloge permettant d'extraire le rythme d'horloge des bits du signal à régénérer, et
- des moyens de modulation permettant de moduler l'amplitude et/ou la phase des solitons par ledit signal d'horloge, lesdits moyens de modulation comprenant un modulateur MACH-ZEHNDER,

caractérisé en ce que ledit modulateur MACH-ZEHNDER comporte un premier et un second amplificateurs optiques à semi-conducteur disposés respectivement dans un premier et un second bras dudit modulateur MACH-ZEHNDER et dont le gain de chacun est modulé sur la base dudit signal d'horloge récupéré.

Avantageusement, le dispositif de régénération selon l'invention comprend en outre des moyens de division d'un signal optique d'horloge, en sortie desdits moyens de récupération, en un premier et un second signaux optiques d'horloge couplés respectivement dans le premier et le second bras dudit modulateur MACH-ZEHNDER pour moduler les gains des premier et second amplificateurs optiques à semi-conducteur respectifs.

Ainsi, on dispose d'un dispositif de régénération commandé par voie optique et permettant d'éviter des "CHIRP" parasites qui peuvent se superposer au signal régénéré.

En outre, les premiers et seconds signaux optiques d'horloge sont respectivement couplés en aval des amplificateurs optiques à semi-conducteur dans les premier et second bras du modulateur MACH-ZEHNDER de manière à se propager dans le sens inverse du signal de solitons à régénérer, de sorte qu'un filtrage bloquant ultérieur des signaux d'horloge n'est pas nécessaire.

Mais en variante, on prévoit également que les premiers et seconds signaux optique d'horloge sont respectivement couplés en amont des amplificateurs optiques à semi-conducteur dans les premier et second bras du modulateur MACH-ZEHNDER de manière à se propager dans le sens du signal de solitons à régénérer.

Par ailleurs, pour pouvoir adapter les paramètres de la fonction de transfert du dispositif de régénération selon l'invention, des moyens de retard des premier et second signaux optique d'horloge et des moyens d'ajustement d'amplitude des premier et second signaux optique d'horloge sont disposés entre lesdits moyens de division et lesdits amplificateurs optiques à semi-conducteurs.

Selon un premier mode de réalisation, lesdits moyens de récupération d'horloge comprennent une unité optoélectronique équipée de moyens de transduction optique / électronique et vice versa, ainsi que de moyens électroniques d'amplification et de filtrage et de moyens de mise en forme des signaux électroniques.

Selon un second mode de réalisation, lesdits moyens de récupération d'horloge comprennent une unité tout optique, exempt de transduction optique / électronique ou vice versa.

Par ailleurs, les longueurs d'ondes des premier et second signaux optiques d'horloge modulant les gains des amplificateurs optiques à semi-conducteur sont différentes de la longueur d'onde des solitons à moduler.

Selon une autre variante du dispositif selon l'invention, lesdits moyens de récupération dudit signal d'horloge comprennent un circuit de commande électrique des gains des premier et second amplificateurs optiques à semi-conducteur.

De plus, de manière générale, l'amplification de chaque amplificateur optique à semi-conducteur est indépendante de la polarisation des solitons à moduler.

En outre, le régime de fonctionnement de chaque amplificateur optique à semi-conducteur est sensiblement proche du régime de saturation pour permettre une modulation efficace du signal de solitons à régénérer.

Selon un développement particulièrement avantageux, le dispositif de régénération selon l'invention possède un gain total d'amplification égal ou supérieur aux pertes engendrées par lui.

Selon un autre développement, le dispositif comprend en outre des moyens de filtrage disposés en amont et/ou en aval du modulateur MACH-ZEHNDER et permettant de contrôler les caractéristiques spectro-temporelles des solitons avant et/ou après modulation.

Par ailleurs, le dispositif de régénération tel que défini-ci dessus se prête particulièrement bien pour une utilisation comme un régénérateur "3R".

De plus, le dispositif selon l'invention peut être utilisé pour moduler de façon indépendante l'amplitude et la phase d'un signal de solitons à régénérer.

L'invention a également pour objet un système de transmission de signaux de solitons par fibre optique, caractérisé en ce qu'il comprend au moins un dispositif de régénération selon l'invention tel que défini ci-dessus.

Selon un développement avantageux, ce système de transmission comprend en outre des moyens de filtrage en ligne des solitons.

On prévoit en outre un système de transmission dont chaque amplificateur optique des signaux de solitons du système de transmission est constitué par un dispositif de régénération avec un gain total d'amplification égal ou supérieur aux pertes engendrées par lui. Dans ce cas, le dispositif selon l'invention permet non seulement de régénérer les signaux de solitons mais aussi de compenser toutes les pertes, en particulier les pertes de ligne de sorte que le système de transmission peut fonctionner sans les amplificateurs en ligne EDFA classiques.

Selon une variante avantageuse, le système de transmission comprend au moins un dispositif de régénération tel que défini ci-dessus disposé en aval d'une unité de multiplexage de signaux en une pluralité de signaux de solitons ayant des longueurs d'onde différentes et le même rythme d'horloge et en amont d'une unité de démultiplexage correspondante, pour assurer la régénération synchrone des signaux de solitons de longueur d'onde différente.

D'autres caractéristiques et avantages de l'invention ressortiront de la description suivante, donnée à titre d'exemple, sans caractère limitatif, en regard des dessins annexés sur lesquels :

- La figure 1, déjà décrite, montré schématiquement un dispositif de régénération en ligne d'un signal optique de solitons par une modulation synchrone de ces solitons, connu de l'art antérieur,
- La figure 2, déjà décrite, est un graphique présentant une simulation numérique sur les influences des pertes engendrées par un dispositif de régénération sur la qualité de transmission,
- La figure 3 montré schématiquement un dispositif de régénération selon l'invention,
- La figure 4 montre schématiquement un exemple d'une unité de récupération optoélectronique d'horloge d'un signal optique,
- La figure 5 montre schématiquement un exemple d'une unité de récupération tout optique d'un signal optique d'horloge, fonctionnant selon les principes d'un laser à fibre en anneau,
- La figure 6 montre schématiquement un premier exemple d'un système de transmission de signaux de solitons selon l'invention, et
- La figure 7 montre schématiquement un second exemple d'un système de transmission de signaux de solitons selon l'invention.

Sur toutes les figures, les repères se réfèrent aux mêmes éléments, et l'échelle n'est pas toujours respectée pour des raisons de clarté.

Par ailleurs, les termes "amont" et "aval" ainsi que "co-propagation" et "contre-propagation" se réfèrent par rapport au sens de propagation du signal optique de solitons à régénérer à l'entrée du dispositif selon l'invention.

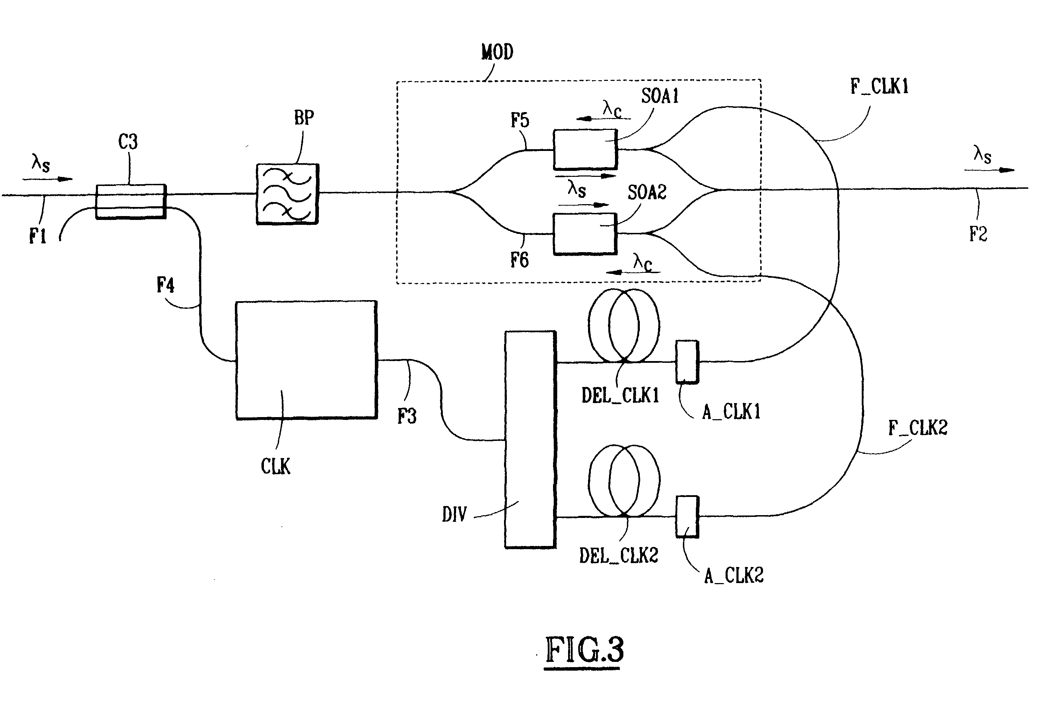

Sur la figure 3 est schématiquement représenté un dispositif de régénération en ligne d'un signal optique de solitons par une modulation synchrone de ces solitons selon l'invention.

Le dispositif de régénération en ligne selon l'invention comprend un modulateur MACH-ZEHNDER MOD comportant un premier SOA1 et un second SOA2 amplificateurs optiques à semi-conducteur, de préférence identiques. Ces amplificateurs optiques à semi-conducteur SOA1 et SOA2 sont respectivement disposés dans un premier F5 et un second F6 bras du modulateur MACH-ZEHNDER MOD.

Les amplificateurs à semi-conducteur SOA1 et SOA2 sont choisis de préférence tels qu'ils amplifient les signaux de solitons indépendamment de la polarisation de ces derniers.

En outre, pour permettre une régénération synchrone en ligne, le dispositif comprend des moyens de récupération d'un signal d'horloge permettant d'extraire le rythme d'horloge des bits du signal à régénérer.

Ces moyens de récupération comprennent un coupleur C3 dont la sortie est reliée par une fibre F4 à l'entrée d'une unité CLK de récupération d'un signal d'horloge.

Selon une première variante avantageuse, l'unité CLK comprend une sortie optique d'un signal optique d'horloge de longueur d'onde $\lambda_c$ différente de la longueur d'onde $\lambda_s$ du signal optique de solitons à régénérer.

Comme cela sera décrit plus loin, l'unité CLK peut être réalisée par des moyens optoélectroniques ou par des moyens tout optiques.

La sortie optique de l'unité CLK est raccordée par l'intermédiaire d'une fibre F3 à des moyens de division DIV 50 / 50 de ce signal optique d'horloge en un premier et un second signaux optiques d'horloge ayant sensiblement la même intensité. Le terme 50/50 signifie que les moyens DIV divisent le signal optique d'horloge en deux signaux optiques d'horloge d'intensité sensiblement égale. Ces moyens de division DIV peuvent par exemple être formés par une banche en Y.

Pour coupler les premier et second signaux optiques d'horloge dans les bras F5 et F6 et moduler ainsi les gains respectifs des premier et second amplificateurs optiques à semi-conducteur SOA1 et SOA2, les moyens de division DIV comprennent une première et une seconde sorties optiques qui sont respectivement reliées par l'intermédiaire des fibres respectives F_CLK1 et F_CLK2 à la première branche F5 et à la seconde branche F6 du modulateur MACH-ZEHNDER MOD, en aval des amplificateurs optiques à semi-conducteur SOA1 et SOA2.

Ce raccordement des fibres F_CLK1 et F CLK2 en aval des amplificateurs optiques à semi-conducteur $SOA_1$

et SOA$_2$ présente l'avantage que les signaux optique d'horloge se propagent en sens opposé des signaux de solitons à régénérer de sorte que dans la fibre optique de sortie F2 ne circule que le signal régénéré de solitons et qu'un filtre bloquant les signaux optique d'horloge n'est pas nécessaire.

Selon une variante non représentée, les signaux optiques d'horloge peuvent aussi être introduits dans les bras F5 et F6 en co-propagation. Dans ce cas, les fibres F_CLK1 et F_CLK2 sont respectivement reliées à la première branche F5 et à la seconde branche F6 du modulateur MACH-ZEHNDER MOD, en amont des amplificateurs optiques à semi-conducteur SOA1 et SOA2. De plus, dans cette variante, un filtre bloquant des signaux optiques d'horloge en co-propagation est prévu dans la fibre optique F2 de sortie.

Par ailleurs, une ligne de retard DEL_CLK1 et des moyens A_CLK1 d'ajustement de l'amplitude du premier signal optique d'horloge constitués par exemple par un atténuateur, sont disposés en série dans la fibre de transmission F_CLK1 afin de pouvoir ajuster le délai et l'amplitude du premier signal optique d'horloge par rapport au second.

De manière analogue, une ligne de retard DEL_CLK2 et des moyens A_CLK2 d'ajustement de l'amplitude du second signal optique d'horloge sont disposés en série dans la fibre de transmission F_CLK2.

Selon une autre variante, on peut également envisager que l'unité CLK comprend un circuit de commande électrique des gains des amplificateurs optiques à semi-conducteur SOA1 et SOA2 pour permettre la modulation de l'amplitude des solitons par ledit signal d'horloge.

En outre, des moyens de filtrage BP sont disposés en amont du modulateur MACH-ZEHNDER MOD pour permettre de contrôler les caractéristiques spectro-temporelles des solitons avant modulation.

Selon des variantes non représentées, ces moyens de filtrage peuvent également être disposés en aval du modulateur MACH-ZEHNDER MOD ou encore être prévus en amont et en aval de celui-ci.

Le dispositif de régénération fonctionne de la manière suivante.

Lorsque le signal de solitons à régénérer arrive par la fibre optique d'entrée F1, le coupleur C3 prélève une petite partie du signal pour en extraire un signal d'horloge par l'unité de récupération CLK. Le signal optique d'horloge en sortie de l'unité CLK est divisé dans les moyens DIV en un premier et un second signal optique d'horloge se propageant respectivement dans les fibres F_CLK1 et F_CLK2. Les délais et les amplitudes des signaux optiques d'horloge sont respectivement ajustés par les lignes de retard DEL_CLK1, DEL_CLK2 ainsi que par les atténuateurs A_CLK1 et A_CLK2.

Le premier signal d'horloge se propageant dans la fibre F_CLK1 provoque la modulation du gain de l'amplificateur optique SOA1, le second signal optique d'horloge se propageant dans la fibre F_CLK2 celui de l'amplificateur optique SOA2 pour effectuer la modulation de l'amplitude des solitons sur la base du signal d'horloge récupéré.

La fonction de transfert du dispositif selon l'invention en fonction du temps t est donnée par la relation suivante :

$$M(t) = U(t)\exp\{-i\Phi(t)\} \qquad (1)$$

avec :

$$U(t) = \sqrt{T_1(t) + 2\sqrt{T_1(t)\,T_2(t)}\cos\{\phi_2(t)-\phi_1(t)\}} \qquad (2)$$

$$\Phi(t) = ar\tan\left\{\frac{\sqrt{T_1(t)}\sin\{\phi_1(t)\}+\sqrt{T_2(t)}\sin\{\phi_2(t)\}}{\sqrt{T_1(t)}\cos\{\phi_1(t)\}+\sqrt{T_2(t)}\cos\{\phi_2(t)\}}\right\} \qquad (3)$$

la transmittivité de chaque amplificateur optique à semi-conducteur SOAi, (i=1 ou 2) étant donnée par:

$$\sqrt{T_i(P_i,t)} = \sqrt{T_0}\exp\left\{\frac{g_0}{2\left(1+{P_i(t)}/{P_{sat}}\right)}\right\} \qquad (4)$$

où $g_0$ est le coefficient de gain de puissance en régime non saturé de l'amplificateur optique à semi-conducteur SOAi, $P_{sat}$ est la puissance de saturation de l'amplificateur optique à semi-conducteur SOAi, et $T_0$ est la perte supplémentaire que subit le signal optique de solitons lors de son passage dans les bras F5 et F6 du modulateur MACH-ZEHNDER MOD. Les phases $\phi_1$(t) et $\phi_2$(t) des relations 2 et 3 représentent respectivement des décalages de phase optique introduit dans le signal de solitons respectivement lors de son passage dans les amplificateurs SOA1 et SOA2 lorsqu'ils sont modulés par les premier et second signaux optiques d'horloge.

$P_i$(t) est la puissance du signal optique d'horloge appliquée à l'amplificateur optique SOAi. Afin que la modulation soit la plus forte possible, l'amplitude maximale de $P_i$(t) est comprise entre $10^{-2} * P_{sat}$ et $10^2 * P_{sat}$, de préférence proche de la puissance de saturation $P_{sat}$.

De plus, chaque amplificateur optique à semi-conducteur SOA1, SOA2 fonctionne préférentiellement en régime proche de la saturation.

Comme on le voit en analysant la fonction de transfert M(t), le dispositif de régénération peut être facilement adapté pour satisfaire aux exigences de modulation d'intensité et de fonction de trille ( "CHIRP" en anglais).

De plus, le dispositif de régénération selon l'invention présente l'avantage que la modulation de l'amplitude et celle de la phase du signal optique de solitons peuvent être contrôlées indépendamment l'une de l'autre, ce qui est très avantageux pour la régénération des solitons.

En outre, le gain de chaque amplificateur optique à semi-conducteur SOA1, SOA2 est choisi assez élevé pour que le dispositif de régénération n'engendre que des pertes faible.

Selon une variante avantageuse, ce gain est même choisi à un tel niveau qu'il compense complètement, voire dépasse les pertes engendrées par le dispositif de régénération de sorte que le dispositif est un régénérateur / amplificateur en ligne du signal de solitons.

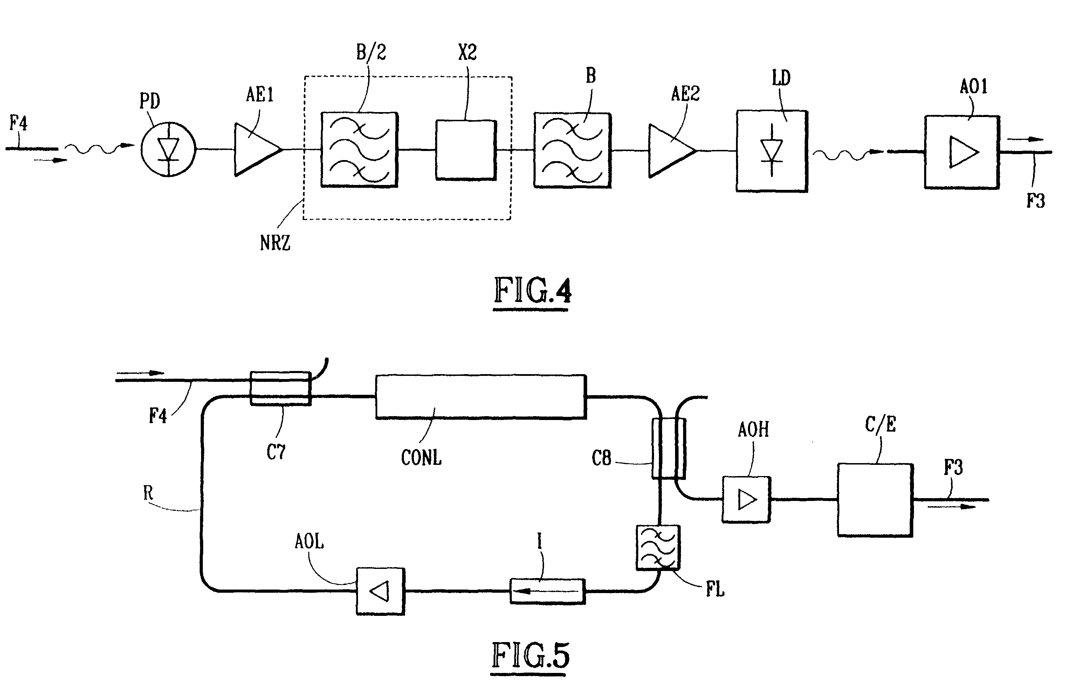

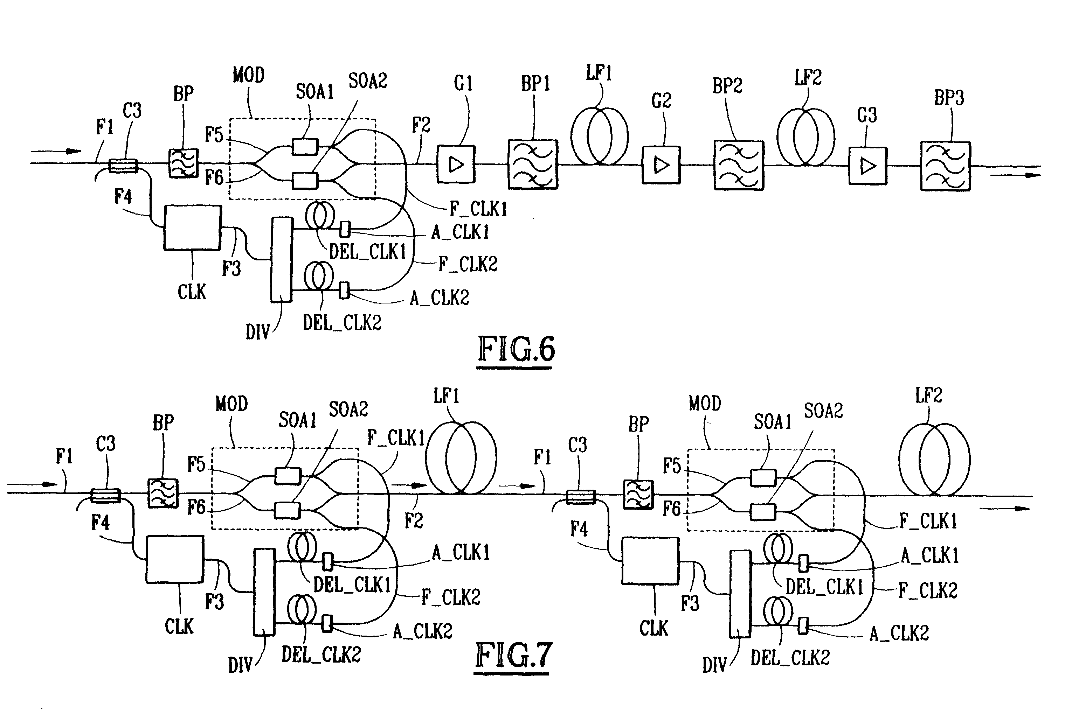

L'unité CLK de récupération d'un signal d'horloge peut être soit une unité optoélectronique (figure 4), soit une unité tout optique (figure 5).

La figure 4 montre schématiquement un exemple de l'unité CLK optoélectronique. Le signal optique prélevé par le coupleur C3 de la figure 3 se propage sur la fibre F4 jusqu'à un photodétecteur PD qui convertit le signal optique reçu en un signal électronique. Le signal électronique ainsi obtenu est d'abord amplifié par un amplificateur électronique hyperfréquence AE1, puis dans le cas d'un signal NRZ (non return to zéro en anglais), le signal sera filtré par un premier filtre passe bande B/2.

Dans l'exemple de la figure 4, et pour un signal NRZ, le signal filtré est ensuite multiplié en fréquence par un doubleur en fréquence X2, et subit un second filtrage passe bande dans le filtre B. Dans le cas d'un signal soliton, le filtrage par le filtre B sera le premier filtrage. Le signal est alors amplifié pour commander un laser diode LD, qui émet un signal lumineux au rythme des impulsions électroniques qui sont les résultats des signaux optiques prélevés en C3. Ce signal optique d'horloge peut éventuellement être amplifié par un amplificateur optique AO1 avant d'être divisé dans les moyens de division DIV de la figure 3.

La figure 5 montre schématiquement un exemple de moyens de récupération dans lesquels l'unité CLK est réalisée de manière tout optique selon les principes de blocage des modes d'un laser à fibre en anneau.

Le signal optique de type soliton, prélevé par le coupleur C3 de la figure 3 se propage sur la fibre F4 jusqu'à une boucle de fibre R à laquelle il est couplé via un coupleur C7. La boucle de fibre R et les différents composants qui s'y trouvent forment un laser en anneau analogue à celui décrit dans l'article de L.E. Adams et al. "All-optical recovery using a modelocked figure eight laser with a semiconductor non-linearity", Electronics Letters, Volume 30, N°20, pp 1696-1697, 29 sept. 1994.

Le laser en anneau comprend des moyens d'amplification AOL, un isolateur optique I pour un fonctionnement unidirectionnel, des moyens de filtrage optique FL centrés sur la longueur d'onde de la lumière laser, et des moyens de couplage optique non linéaire CONL permettant d'obtenir des non linéarités d'amplitude et/ ou de phase en fonction de l'amplitude du champ électrique de la lumière circulant dans la fibre R. Ces moyens non linéaires peuvent par exemple être un miroir optique non linéaire NOLM tel que décrit dans l'article précité d'Adams et al..

Le laser en anneau peut fonctionner en continu (CW) en l'absence d'un signal soliton injecté via le coupleur C7. En revanche, dès qu'un train de bits est introduit via le coupleur C7, il y a un déphasage non linéaire asymétrique introduit entre des composants en contre-propagation, une augmentation de la transmittivité du miroir optique non linéaire, et un blocage des modes du laser en anneau au rythme des bits du signal. Ces impulsions peuvent ensuite être prélevées via un coupleur optique C8 pour donner un signal d'horloge sensiblement sans gigue temporelle. Pour rendre ce signal aisément exploitable en vue de la modulation synchrone, la figure 5 montre un deuxième amplificateur optique AOH et des moyens C/E de compression et/ ou expansion, pour donner la forme voulue aux impulsions issue du laser en anneau (amplitude, durée, forme temporelle de montée et de descente, ...). En effet, les impulsions brutes sont relativement étroites, et il peut être souhaitable de les élargir avant d'être divisées et appliquées aux amplificateurs optiques à semi-conducteurs SOA1 et SOA2.

La figure 6 montre schématiquement un premier exemple d'un système de transmission de signaux de solitons selon l'invention (C3, CLK, MOD) ainsi qu'une pluralité d'amplificateurs optiques en ligne (G1, G2, G3...) et une pluralité de filtres guidants (BP1, BP2, BP3, ....). Les filtres guidants compriment la largeur spectrale des solitons, mais enlèvent de l'énergie des solitons en ce faisant. Comme expliqué dans l'article de L. F. Mollenauer et al. " The sliding-frequency guiding filter : an improved form of soliton jitter control", Optics Letters VOL. 17, N° 22, pp. 1575-1577, du 15 novembre 1992, en réduisant la largeur spectral des solitons, la gigue temporelle est aussi réduite par les filtres guidants.

La figure 7 montre schématiquement un second exemple d'un système de transmission de signaux solitons selon l'invention (C3, CLK, MOD). Ce système diffère de celui de la figure 6 par le fait que le dispositif selon l'invention est réglé de telle manière que outre la modulation des signaux à solitons, il amplifie ces signaux avec un certain gain supérieur aux pertes de couplage et aux pertes supplémentaires engendrées par le dispositif lui-même. Ainsi le système de transmission ne comporte que les dispositifs de régénération selon l'invention disposés dans la fibre de transmission à des intervalles de distances prédéfinies, par exemple de 50 km. En revanche, ce système de transmission ne comporte pas d'autres amplificateurs optiques en ligne supplémentaires tels que par exemple les EDFA.

Dans ce système de transmission, le dispositif de régénération agit par conséquent comme un régénérateur connu au nom de "régénérateur 3R", c'est-à-dire un régénérateur qui recale les solitons dans le temps ("**R**etiming" en anglais), les remet dans leurs enveloppes d'origine ("**R**eshaping" en anglais) et les réamplifie ("**R**eamplification" en anglais) à leurs niveaux d'amplitude d'origine.

Selon encore une autre variante avantageuse non représenté, le système de transmission comporte en outre une unité de multiplexage de signaux en une pluralité de signaux de solitons ayant des longueurs d'onde différentes $\lambda_1, \lambda_2, \lambda_3$ ..... et le même rythme d'horloge et une unité de démultiplexage correspondante. Le dispositif de régénération selon l'invention est disposé en aval de l'unité de multiplexage et en amont de l'unité de démultiplexage et assure la régénération synchrone et simultané des signaux de solitons de longueurs d'onde différentes.

**Revendications**

1. Dispositif de régénération en ligne d'un signal optique de solitons par une modulation synchrone de ces solitons, ledit dispositif comprenant :

   - des moyens (C3, CLK) de récupération d'un signal d'horloge permettant d'extraire le rythme d'horloge des bits du signal à régénérer, et
   - des moyens (MOD) de modulation permettant de moduler l'amplitude et/ou la phase des solitons par ledit signal d'horloge, lesdits moyens de modulation comprenant un modulateur MACH-ZEHNDER (MOD),

   **caractérisé en ce que** ledit modulateur MACH-ZEHNDER (MOD) comporte un premier (SOA1) et un second (SOA2) amplificateurs optiques à semi-conducteur disposés respectivement dans un premier (F5) et un second (F6) bras dudit modulateur MACH-ZEHNDER (MOD) et dont le gain de chacun est modulé sur la base dudit signal d'horloge récupéré.

2. Dispositif selon la revendication 1, **caractérisé en ce qu'**il comprend en outre des moyens (DIV) de division d'un signal optique d'horloge, en sortie desdits moyens (C3, CLK) de récupération, en un premier et un second signaux optiques d'horloge couplés respectivement dans le premier (F5) et le second (F6) bras dudit modulateur MACH-ZEHNDER (MOD) pour moduler les gains des premier (SOA1) et second (SOA2) amplificateurs optiques à semi-conducteur respectifs.

3. Dispositif selon la revendication 2, **caractérisé en ce que** les premiers et seconds signaux optiques d'horloge sont respectivement couplés en aval des amplificateurs optiques à semi-conducteur (SOA1, SOA2) dans les premier (F5) et second (F6) bras du modulateur MACH-ZEHNDER (MOD) de manière à se propager dans le sens inverse du signal de solitons à régénérer.

4. Dispositif selon la revendication 2, **caractérisé en ce que** les premiers et seconds signaux optique d'horloge sont respectivement couplés en amont des amplificateurs optiques à semi-conducteur (SOA1, SOA2) dans les premier (F5) et second (F6) bras du modulateur MACH-ZEHNDER (MOD) de manière à se propager dans le sens du signal de solitons à régénérer.

5. Dispositif selon l'une quelconque des revendications 1 à 4, **caractérisé en ce que** des moyens (DEL_CLK1, DEL_CLK2) de retard des premier et second signaux optique d'horloge et des moyens (A_CLK1, A_CLK2) d'ajustement d'amplitude des premier et second signaux optique d'horloge sont disposés entre lesdits moyens (DIV) de division et lesdits amplificateurs optiques à semi-conducteurs (SOA1, SOA2).

6. Dispositif selon l'une quelconque des revendications 1 à 5, **caractérisé en ce que** lesdits moyens (C3, CLK) de récupération d'un signal d'horloge comprennent une unité optoélectronique de récupération de ce signal d'horloge, équipée de moyens de transduction optique / électronique (PD) et vice versa (LD), ainsi que de moyens électroniques d'amplification (AE1, AE2) et de filtrage (B/2, B) et de moyens (NRZ) de mise en forme des signaux électroniques.

**7.** Dispositif selon l'une quelconque des revendications 1 à 5, **caractérisé en ce que** lesdits moyens de récupération d'horloge comprennent une unité tout optique de récupération d'un signal d'horloge (C7, CONL, C8, FL, I, AOL), exempt de transduction optique / électronique ou vice versa.

**8.** Dispositif selon l'une quelconque des revendications 1 à 7, **caractérisé en ce que** les longueurs d'ondes ($\lambda_c$) des premier et second signaux optiques d'horloge modulant les gains des amplificateurs optiques à semi-conducteur sont différentes de la longueur d'onde ($\lambda_s$) des solitons à moduler.

**9.** Dispositif selon la revendication 1, **caractérisé en ce que** lesdits moyens de récupération dudit signal d'horloge comprennent un circuit de commande électrique des gains des premier et second amplificateurs optiques à semi-conducteur.

**10.** Dispositif selon l'une quelconque des revendications 1 à 9, **caractérisé en ce que** l'amplification de chaque amplificateur optique à semi-conducteur est indépendante de la polarisation des solitons à moduler.

**11.** Dispositif selon l'une quelconque des revendications 1 à 10, **caractérisé en ce que** le régime de fonctionnement de chaque amplificateur optique à semi-conducteur est sensiblement proche du régime de saturation.

**12.** Dispositif selon l'une quelconque des revendications 1 à 11, **caractérisé en ce qu'**il possède un gain total d'amplification égal ou supérieur aux pertes engendrées par lui.

**13.** Dispositif selon l'une quelconque des revendications 1 à 12, **caractérisé en ce qu'**il comprend en outre des moyens de filtrage (BP) disposés en amont et/ou en aval du modulateur MACH-ZEHNDER (MOD) et permettant de contrôler les caractéristiques spectro-temporelles des solitons avant et/ou après modulation.

**14.** Utilisation d'un dispositif de régénération selon la revendication 12 comme un régénérateur "3R".

**15.** Utilisation d'un dispositif de régénération selon l'une quelconque des revendications 1 à 13 pour la modulation indépendante de l'amplitude et de la phase d'un signal de solitons à régénérer.

**16.** Système de transmission de signaux de solitons par fibre optique, **caractérisé en ce qu'**il comprend au moins un dispositif de régénération selon l'une quelconque des revendications 1 à 13.

**17.** Système de transmission de signaux de solitons par fibre optique selon la revendication 16, **caractérisé en ce qu'**il comprend en outre des moyens de filtrage en ligne (BP1, BP2, ...) des solitons.

**18.** Système de transmission selon la revendication 16 ou 17, **caractérisé en ce que** chaque amplificateur optique des signaux de solitons du système de transmission est constitué par un dispositif de régénération selon la revendication 12.

**19.** Système de transmission selon l'une quelconque des revendications 16 à 18, **caractérisé en ce qu'**il comprend au moins un dispositif de régénération selon l'une quelconque des revendications 1 à 13, disposé en aval d'une unité de multiplexage de signaux en une pluralité de signaux de solitons ayant des longueurs d'onde différentes et le même rythme d'horloge et en amont d'une unité de démultiplexage correspondante, pour assurer la régénération synchrone des signaux de solitons de longueur d'onde différente.

**Patentansprüche**

**1.** Verfahren zur Online-Regenerierung eines optischen Signals aus Solitonen durch eine synchrone Modulation dieser Solitonen, wobei die Vorrichtung umfasst

- Mittel (C3, CLK) zur Rückgewinnung eines Taktsignals, das gestattet, die Taktfrequenz der Bits des zu regenerierenden Signals zu gewinnen, und
- Modulationsmittel (MOD), die gestatten, die Amplitude und/oder die Phase der Solitonen durch das Taktsignal zu modulieren, wobei die Modulationsmittel einen Mach-Zehnder-Modulator (MOD) umfassen,

**dadurch gekennzeichnet, dass** der Mach-Zehnder-Modulator (MOD) einen ersten (SOA1) und einen zweiten SOA2) optischen Halbleiterverstärker aufweist, die in einem ersten (F5) bzw. einem zweiten (F6) Zweig des Mach-Zehnder-Modulators (MOD) angeordnet sind und deren jeweilige Verstärkung auf der Basis des rückgewonnenen Taktsignals moduliert wird.

2. Vorrichtung nach Anspruch 1, **dadurch gekennzeichnet, dass** sie außerdem am Ausgang der Widergewinnungsmittel (C3, CLK) Mittel (DIV) zur Teilung eines optischen Taktsignals in ein erstes und ein zweites optischen Taktsignal umfasst, die im ersten (F5) bzw. zweiten (F6) Zweig des Mach-Zehnder-Modulators (MOD) gekoppelt werden, um die Verstärkungen der jeweiligen ersten (SOA1) und zweiten (SOA2) optischen Halbleiterverstärker zu modulieren.

3. Vorrichtung nach Anspruch 2, **dadurch gekennzeichnet, dass** die ersten und zweiten optischen Taktsignale stromabwärts der optischen Halbleiterverstärker (SOA1, SOA2) in den ersten (F5) bzw. zweiten (F6) Zweig des Mach-Zehnder-Modulators (MOD) eingekoppelt werden, um sich in der Richtung auszubreiten, die dem *zu* regenerierenden Signal aus Solitonen entgegengesetzt ist.

4. Vorrichtung nach Anspruch 2, **dadurch gekennzeichnet, dass** die ersten und zweiten optischen Taktsignale aufwärts der optischen Halbleiterverstärker (SOA1, SOA2) in den ersten (F5) bzw. zweiten (F6) Zweig des Mach-Zehnder-Modulators (MOD) eingekoppelt werden, um sich in der Richtung des zu regenerierenden Signal aus Solitonen auszubreiten.

5. Vorrichtung nach einem der Ansprüche 1 bis 4, **dadurch gekennzeichnet, dass** Mittel (DEL_CLK1, DEL_CLK2) zur Verzögerung der ersten und zweiten optischen Taktsignale und Mittel (A_CLK1, A_CLK2) zur Einstellung der Amplitude der ersten und zweiten optischen Taktsignale zwischen den Teilungsmittel (DIV) und den optischen Halbleiterverstärkern (SOA1, SOA2) angeordnet sind.

6. Vorrichtung nach einem der Ansprüche 1 bis 5, **dadurch gekennzeichnet, dass** die Mittel (C3, CLK) zur Rückgewinnung eines Taktsignals eine optoelektronische Einheit zur Rückgewinnung dieses Taktsignals umfassen, die mit Mitteln zur Übersetzung optisch/elektronisch (PD) und umgekehrt (LD) sowie elektronischen Mitteln zur Verstärkung (AE1, AE2) und Filterung (B/2, B) und Mitteln (NRZ) zum Formen der elektronischen Signale ausgestattet ist.

7. Vorrichtung nach einem der Ansprüche 1 bis 5, **dadurch gekennzeichnet, dass** die Mittel zur Taktrückgewinnung eine vollständig optische Einheit zur Rückgeweinnung eines Taktsignals (C7, CONL, C8, FL, I, AOL) umfasst, die von einer Übersetzung optisch/elektronisch oder umgekehrt frei ist.

8. Vorrichtung nach einem der Ansprüche 1 bis 7, **dadurch gekennzeichnet, dass** die Wellenlängen ($\lambda_c$) der ersten und zweiten optischen Taktsignale, die die Verstärkungen der optischen Halbleiterverstärker modulieren, von der Wellenlänge ($\lambda_S$) der zu modulierenden Solitonen verschieden sind.

9. Vorrichtung nach Anspruch 1, **dadurch gekennzeichnet, dass** die Mittel zur Ruckgewinnung des Taktsignals eine elektrische Steuerschaltung für die Verstärkungen der ersten und zweiten optischen Halbleiterverstärker umfassen.

10. Vorrichtung nach einem der Ansprüche 1 bis 9, **dadurch gekennzeichnet, dass** die Verstärkung jedes optischen Halbleiterverstärkers von der Polarisation der zu modulierenden Solitonen unabhängig ist.

11. Vorrichtung nach einem der Ansprüche 1 bis 10, **dadurch gekennzeichnet, dass** der Arbeitsbereich jedes optischen Halbleiterverstärkers im Wesentlichen nahe dem Sättigungsbereich liegt.

12. Vorrichtung nach einem der Ansprüche 1 bis 11, **dadurch gekennzeichnet, dass** sie eine Gesamtverstärkung gleich oder höher als die durch sie verursachten Verluste aufweist.

13. Vorrichtung nach einem der Ansprüche 1 bis 12, **dadurch gekennzeichnet, dass** sie außerdem Filtermittel (BP) umfasst, die stromaufwärts und/oder stromabwärts des Mach-Zehnder-Modulators (MOD) angeordnet sind und gestatten, die spektral-zeitlichen Charakteristiken der Solitonen vor und/oder nach einer Modulation zu steuern.

**14.** Verwendung einer Regenerierungsvorrichtung nach Anspruch 12 als "3R"-Regenerator.

**15.** Verwendung einer Regenerierungsvorrichtung nach einem der Ansprüche 1 bis 13 für die unabhängige Modulation der Amplitude und der Phase eines zu regenerierenden Signals aus Solitonen.

**16.** System zur Übertragung von Signalen aus Solitonen mit optischen Fasern, **dadurch gekennzeichnet, dass** es wenigstens eine Regenerierungsvorrichtung nach einem der Ansprüche 1 bis 13 umfasst.

**17.** System zur Übertragung von Signalen aus Solitonen mit optischen Fasern nach Anspruch 16, **dadurch gekennzeichnet, dass** es außerdem Mittel zur Online-Filterung (*BP1*, *BP2*, ...) der Solitonen umfasst.

**18.** Übertragungssystem nach Anspruch 16 oder 17, **dadurch gekennzeichnet, dass** jeder optische Verstärker für die Signale aus Solitonen des Übertragungssystems aus einer Regenerierungsvorrichtung nach Anspruch 12 besteht.

**19.** Übertragungssystem nach einem der Ansprüche 16 bis 18, **dadurch gekennzeichnet, dass** es wenigstens eine Regenerierungsvorrichtung nach einem der Ansprüche 1 bis 13 umfasst, die stromabwärts einer Einheit zur Multiplexierung von Signalen in einer Vielzahl von Signalen aus Solitonen mit verschiedenen Wellenlängen und der gleichen Taktfrequenz und stromaufwärts einer entsprechenden Demultiplexierungseinheit angeordnet ist, um die synchrone Regenerierung der Signale aus Solitonen mit unterschiedlicher Wellenlänge sicherzustellen.

**Claims**

**1.** A regenerator for in-line regeneration of a soliton optical signal by synchronous modulation of the solitons, said regenerator comprising:

- means (C3, CLK) for recovering a clock signal for extracting the clock rate of the bits of the signal to be regenerated, and
- modulator means (MOD) for modulating the amplitude and/or the phase of the solitons by means of said clock signal, said modulator means comprising a MACH-ZEHNDER modulator (MOD),

   **characterized in that** said MACH-ZEHNDER modulator (MOD) comprises first and second semiconductor optical amplifiers (SOA1, SOA2) in respective first and second arms (F5, F6) of said MACH-ZEHNDER modulator (MOD) and the gain of each of which is modulated in accordance said recovered clock signal.

**2.** A regenerator according to claim 1, **characterized in that** it further comprises divider means (DIV) for dividing a clock optical signal at the output of said recovery means (C3, CLK) into first and second clock optical signals respectively coupled into the first and second arms (F5, F6) of said MACH-ZEHNDER modulator (MOD) to modulate the gains of the first and second semiconductor amplifiers (SOA1, SOA2), respectively.

**3.** A regenerator according to claim 2, **characterized in that** the first and second clock optical signals are respectively coupled downstream of the semiconductor amplifiers (SOA1, SOA2) into the first and second arms (F5, F6) of the MACH-ZEHNDER modulator (MOD) so as to propagate in the opposite direction to the soliton signals to be regenerated.

**4.** A regenerator according to claim 2, **characterized in that** the first and second clock optical signals are respectively coupled upstream of the semiconductor optical amplifiers (SOA1, SOA2) into the first and second arms (F5, F6) of the MACH-ZEHNDER modulator (MOD) so as to propagate in the same direction as the soliton signal to be regenerated.

**5.** A regenerator according to any one of claims 1 to 4, **characterized in that** delay means (DEL_CLK1, DEL_CLK2) for delaying the first and second clock optical signals and adjuster means (A_CLK1, A_CLK2) for adjusting the amplitude of the first and second clock optical signals are disposed between said divider means (DIV) and said semiconductor optical amplifiers (SOA1, SOA2).

**6.** A regenerator according to any one of claims 1 to 5, **characterized in that** said clock signal recovery means (C3, CLK) comprise an optoelectronic clock signal recovery unit provided with optical/electronic transducer means (PD), electronic/optical transducer means (LD) and electronic means for amplifying (AE1, AE2), filtering (B/2, B) and reshaping (NRZ) electronic signals.

7. A regenerator according to any one of claims 1 to 5, **characterized in that** said clock recovery means comprise an all-optical clock signal recovery unit (C7, CONL, C8, FL, I, AOL) using no optical/electronic transducer or <u>vice versa.</u>

8. A regenerator according to any one of claims 1 to 7, **characterized in that** the wavelengths ($\lambda_c$) of the first and second clock optical signals modulating the gains of the semiconductor optical amplifiers are different from the wavelength ($\lambda_s$) of the solitons to be modulated.

9. A regenerator according to claim 1, **characterized in that** said clock signal recovery means comprise a circuit for electrically controlling the gains of the first and second semiconductor optical amplifiers.

10. A regenerator according to any one of claims 1 to 9, **characterized in that** the amplification performed by each semiconductor optical amplifier is independent of the polarization of the solitons to be modulated.

11. A regenerator according to any one of claims 1 to 10, **characterized in that** the operating conditions of each semiconductor optical amplifier are substantially close to saturation conditions.

12. A regenerator according to any one of claims 1 to 11, **characterized in that** it has a total amplification gain equal to or greater than the losses it causes.

13. A regenerator according to any one of claims 1 to 12, **characterized in that** it further comprises filter means (BP) upstream and/or downstream of the MACH-ZEHNDER modulator (MOD) for controlling the spectral-temporal characteristics of the solitons before and/or after modulation.

14. The use of a regenerator according to claim 12 as a "3R" regenerator.

15. The use of a regenerator according to any one of claims 1 to 13 for independent amplitude and phase modulation of a soliton signal to be regenerated.

16. A system for transmitting soliton signals over optical fibers, **characterized in that** it comprises at least one regenerator according to any one of claims 1 to 13.

17. A system for transmitting soliton signals over optical fibers according to claim 16, **characterized in that** it further comprises in-line filter means (BP1, BP2,...) for filtering the solitons.

18. A transmission system according to claim 16 or claim 17, **characterized in that** each soliton signal optical amplifier of the transmission system comprises a regenerator according to claim 12.

19. A transmission system according to any one of claims 16 to 18, **characterized in that** it comprises at least one regenerator according to any one of claims 1 to 13 downstream of a signal multiplexer for multiplexing signals into a plurality of soliton signals having different wavelengths and the same clock rate and upstream of a corresponding demultiplexer for synchronously regenerating the soliton signals with different wavelengths.

FIG.1

FIG.2

FIG.3

EP 0 975 106 B1

FIG.4

F3
AO1
LD
AE2
B
X2
B/2
NRZ
AE1
PD
F4

FIG.5

F3
C/E
AOH
FL
C8
CONL
I
C7
AOL
F4
R

FIG.6

FIG.7

EP 0 975 106 B1